# EUROPÄISCHE PATENTSCHRIFT

(11) **EP 2 092 214 B1**
(45) Veröffentlichungstag und Bekanntmachung des Hinweises auf die Patenterteilung: **03.09.2014**
(21) Anmeldenummer: 07856713.8
(22) Anmeldetag: 13.12.2007
(51) Int. Cl.: F16F 15/14

(54) **DREHSCHWINGUNGSDÄMPFERANORDNUNG, INSBESONDERE ZUR ANBRINGUNG AN EINER KRAFTFAHRZEUGKURBELWELLE**
DAMPING ARRANGEMENT FOR ROTARY OSCILLATIONS, PARTICULARLY FOR MOUNTING ON A MOTOR VEHICLE CRANKSHAFT
ENSEMBLE AMORTISSEUR DE VIBRATIONS DE TORSION, À INSTALLER NOTAMMENT SUR UN VILEBREQUIN DE VÉHICULE AUTOMOBILE

(30) Priorität: 21.12.2006 DE 102006060767
(43) Veröffentlichungstag der Anmeldung: 26.08.2009
(73) Patentinhaber: Süddeutsche Gelenkscheibenfabrik GmbH & Co. KG, 84478 Waldkraiburg (DE)
(72) Erfinder: ROTHE, Joachim, 84453 Mühldorf (DE); JERYE, Steffen, 83527 Haag (DE); KOBUS, Franz, 84555 Jettenbach (DE); ORTHOFER, Wolfgang, 84539 Ampfing (DE)
(74) Vertreter: Thum, Bernhard
(86) Internationale Anmeldenummer: PCT/EP2007/010970
(87) Internationale Veröffentlichungsnummer: WO 2008/077504

(56) Entgegenhaltungen:
- WO-A-97/43563
- DE-A1- 4 418 742
- DE-A1- 10 241 316
- FR-A- 2 611 846
- GB-A- 1 047 006
- GB-A- 2 021 733
- US-A- 2 764 038
- US-A- 4 378 865

## Beschreibung

Die vorliegende Erfindung betrifft eine Drehschwingungsdämpferanordnung mit einer um eine Drehachse drehbaren Primärmasse, einer relativ um die Drehachse verdrehbaren Sekundärmasse und einem zwischen Primärmasse und Sekundärmasse angeordneten Elastomerkörper, wobei zumindest eine von Primärmasse und Sekundärmasse als Baugruppe mehrerer Masseteile aufgebaut ist.

Eine Drehschwingungsdämpferanordnung der gattungsgemäßen Art ist aus dem Dokument US 2,764,038 A bekannt. US 2,764,038 A offenbart eine Drehschwingungsdämpfervorrichtung mit einer zweiteiligen Primärmasse bestehend aus einer Nabe und einer Scheibe, so wie einer Sekundärmasse und einem zwischen Primär- und Sekundärmasse angeordneten Elastomerkörper. Der Elastomerkörper weist in einem achsenthaltenen Schnitt betrachtet einen im wesentlichen U-förmigen Querschnitt auf, so dass die Masseteile an den Längsschenkeln des U-förmigen Elastomerkörpers angreifen.

Eine weitere derartige Drehschwingungsdämpferanordnung wird beispielsweise an einer Kurbelwelle eines Kraftfahrzeugsmotors angebracht, um Nebenaggregate, wie beispielsweise eine Lichtmaschine oder dergleichen, anzutreiben. Im modernen Kraftfahrzeugbau wird versucht, Drehschwingungen, die im üblichen Drehzahlbereich der Kurbelwelle auftreten, zu dämpfen. Hierzu wird beispielsweise die Riemenscheibe genutzt, die zum Antrieb von Nebenaggregaten an der Kurbelwelle angebracht ist. Die Dämpfungscharakteristik einer derartigen Drehschwingungsdämpferanordnung wird auf die Eigenfrequenz der Motorkurbelwelle in deren üblichem Drehzahlbereich abgestimmt.

Eine Drehschwingungsdämpferanordnung der gattungsgemäßen Art ist aus dem Dokument DE 102 41 316 A1 bekannt. Dieses beschreibt einen gebauten Drehschwingungsdämpfer, bei dem die Primärmasse aus zwei Blechumformteilen hergestellt ist und die Sekundärmasse von einem ringförmigen Masseteil gebildet ist, das an seinem Außenumfang eine umlaufende Keilprofilformation zum Wechselwirken mit einer komplementären Formation an einem Keilriemen aufweist. Zwischen Primärmasse und Sekundärmasse sind zwei scheibenförmige Elastomerkörper angeordnet. Die in diesem Stand der Technik gezeigte Anordnung weist im Verhältnis zur Einfachheit des Gesamtbauteils eine verhältnismäßig große Anzahl verschiedenartiger Einzelbauteile auf, was deren Herstellung aufwendig und damit teuer macht. Darüber hinaus kann die Tatsache, dass die beiden Elastomerkörper separat voneinander anzubringen sind, zu Montagefehlern und Unwuchten führen. Auch eine asymmetrische Kraftverteilung bei exzentrischer Anordnung der beiden Elastomerkörperscheiben kann sich ergeben.

Eine vergleichbare Lösung ist ferner aus dem Dokument US 4,023,428 bekannt. Auch bei dieser Anordnung handelt es sich um eine aus einer Vielzahl von Bauteilen hergestellte Drehschwingungsdämpferanordnung, die aufgrund der Teilezahl und aufgrund ihres Montageaufwands dieselben Probleme aufweist, wie im Hinblick auf DE 102 41 316 A1 beschrieben.

Ferner zeigt das Dokument DE 41 18 871 A1 eine Lösung, bei der die Primärmasse durch eine Vielzahl von Umformschritten hergestellt wird. Auch diese Lösung ist wegen der Vielzahl der Herstellungsschritte aufwendig.

Schließlich zeigt der Stand der Technik gemäß DE 44 35 936 A1 eine Anordnung, bei der der Elastomerkörper in nicht vorgeformter Weise bei der Montage eingesetzt wird, beispielsweise durch Einschießen.

Es ist Aufgabe der vorliegenden Erfindung, eine Drehschwingungsdämpferanordnung der eingangs bezeichneten Art bereitzustellen, die bei einfachem Aufbau und kostengünstiger Herstellung eine hohe Lebensdauer aufweist.

Diese Aufgabe wird durch eine Drehschwingungsdämpferanordnung nach Anspruch 1 gelöst.

Durch Verwenden eines Elastomerkörpers mit U-förmigem Querschnitt kann die Teilezahl vorab reduziert werden. Insbesondere lässt sich ein solcher Elastomerkörper während der Montage in eine Sollposition bringen, beispielsweise dadurch, dass er auf eine entsprechende Aufnahmeformation an der Primärmasse oder der Sekundärmasse aufgesteckt wird. Probleme, wie sie sich beispielsweise im Hinblick auf eine koaxiale Ausrichtung der beiden Gummischeiben gemäß Dokument DE 102 41 316 A1 ergeben, werden dadurch unterbunden. Darüber hinaus bringt die Verwendung eines vorgeformten Elastomerkörpers den Vorteil mit sich, dass dieser nicht durch verhältnismäßig aufwendige Arbeitsschritte in eine bereits vormontierte Anordnung eingeschossen werden muss, was das Risiko einer Beschädigung des Elastomerkörpers mit sich bringen würde. Ferner kann durch den Aufbau von Primärmasse und/oder Sekundärmasse als Baugruppe mehrerer Masseteile gegenüber dem Stand der Technik, der auf Umformlösungen setzt, der Fertigungsaufwand erheblich geringer gehalten werden.

Eine Weiterbildung der Erfindung sieht vor, dass der Elastomerkörper durch einen Vorvulkanisierungsprozess vor einem Einbau in die Drehschwingungsdämpferanordnung vorgeformt ist. Bei der Erfindung ist es nicht erforderlich, den Elastomerkörper unmittelbar an der Primärmasse oder an der Sekundärmasse adhäsiv anzubringen. Optional kann dies jedoch zusätzlich vorgesehen sein.

Zur Vereinfachung der Konstruktion sieht eine Weiterbildung der Erfindung vor, dass die Masseteile über eine Nietverbindung miteinander verbunden sind. Ferner kann vorgesehen sein, dass die Primärmasse mit einer Antriebswelle verbindbar ist. Hierzu kann die Primärmasse eine Achsaufnahmeöffnung und weitere Befestigungsbohrungen aufweisen, um die Primärmasse an der Antriebswelle anzuschrauben.

Erfindungsgemäß ist vorgesehen, dass die Primärmasse sowohl mit der Antriebswelle verbindbar ist als auch die Keilprofilformation an ihrem Außenumfangsbereich aufweist, wobei die Sekundärmasse zusammen mit dem Elastomerkörper in einem in der Primärmasse ausgebildeten Hohlraum relativverdrehbar aufgenommen ist. Die erfindungsgemäße Ausführung unterscheidet sich von den vorangehend diskutierten Ausführungsvarianten insbesondere dadurch, dass die Primärmasse sowohl mit einer Schnittstelle zur Kurbelwelle als auch mit der Keilprofilformation zum Wechselwirken mit dem Keilriemen ausgebildet ist. Dadurch erfolgt über die Primärmasse eine unmittelbare Drehmomentübertragung ohne Zwischenschaltung des Elastomerkörpers von der Kurbelwelle oder einer anderweitig mit der Drehschwingungsdämpferanordnung gekoppelten Welle auf den an der erfindungsgemäßen Drehschwingungsdämpferanordnung im Umfangsbereich angreifenden Keilriemen. Die Sekundärmasse ist sozusagen schwimmend unter Vermittlung des Elastomerkörpers in der Primärmasse aufgenommen. Aufgrund trägheitsbedingter Relativverdrehung zur Primärmasse dämpft die Sekundärmasse Torsionsschwingungen der Kurbelwelle im Stile eines Viskosedämpfers. Um Unwuchten und undefinierte Relativbewegungen zwischen Primärmasse und Sekundärmasse bei dieser Ausführungsvariante der Erfindung zu vermeiden, ist ferner vorgesehen, dass sich die Sekundärmasse über einen Gleitlagerring gleitbeweglich an der Primärmasse abstützt, wobei der Gleitlagerring in dem Elastomerkörper angeordnet ist. Der Gleitlagerring sorgt also für eine definierte Relativverdrehung zwischen Primärmasse und Sekundärmasse.

Für alle vorstehend beschriebenen Ausführungsformen der Erfindung gilt, dass eine Drehschwingungsdämpfung durch eine trägheitsbedingte Relativverdrehung zwischen Primärmasse und Sekundärmasse erfolgt. Insbesondere bei großen Drehzahländerungen pro Zeiteinheit kann es dabei zu verhältnismäßig großhubigen Relativverdrehungen kommen. Um das Ausmaß der Relativverdrehung zwischen Primärmasse und Sekundärmasse zu beschränken, können bei allen Ausführungsformen der Erfindung Anschlagmittel vorgesehen sein. Dieser Aspekt der Erfindung kann beispielsweise dadurch umgesetzt werden, dass die Anschlagmittel wenigstens ein Anschlagelement an der Primärmasse und wenigstens ein korrespondierendes Gegenanschlagelement an der Sekundärmasse aufweisen. So können die Anschlagelemente von einzelnen Nieten, oder Wälzkörpern, integral angebrachten Ausformungen oder dergleichen gebildet sein, die mit korrespondierenden Anschlagformationen bzw. Anschlagflächen bei Erreichen der maximal zulässigen Relativverdrehung zwischen Primärmasse und Sekundärmasse in Anlage gelangen.

Die Erfindung wird im Folgenden anhand der beigefügten Figuren beispielhaft erläutert. Es stellen dar:
- Fig. 1: eine Draufsicht einer beispielhaften Drehschwingungsdämpferanordnung;
- Fig.2: eine achsenthaltende Schnittansicht einer Drehschwingungsdämpferanordnung entsprechend der Schnittlinie II-II aus Fig.1;
- Fig.3: eine zweite Ausführungsform einer beispielhaften Drehschwingungsdämpferanordnung in der Draufsicht;
- Fig.4: eine achsenthaltende Schnittansicht der zweiten Ausführungsform entsprechend der Schnittlinie IV-IV aus Fig.3;
- Fig.5: die zweite Ausführungsform mit einem alternativen Verbindungselement in der Draufsicht;
- Fig.6: eine achsenthaltende Schnittansicht der zweiten Ausführungsform entsprechend der Schnittlinie VI-VI in Fig.5;
- Fig.7: eine erfindungsgemäße Ausführungsform einer erfindungsgemäßen Drehschwingungsdämpferanordnung in der Draufsicht;
- Fig.8: eine achsenthaltende Schnittansicht der erfindungsgemäßen Ausführungsform entsprechend der Schnittlinie VIII-VIII aus Fig.7.

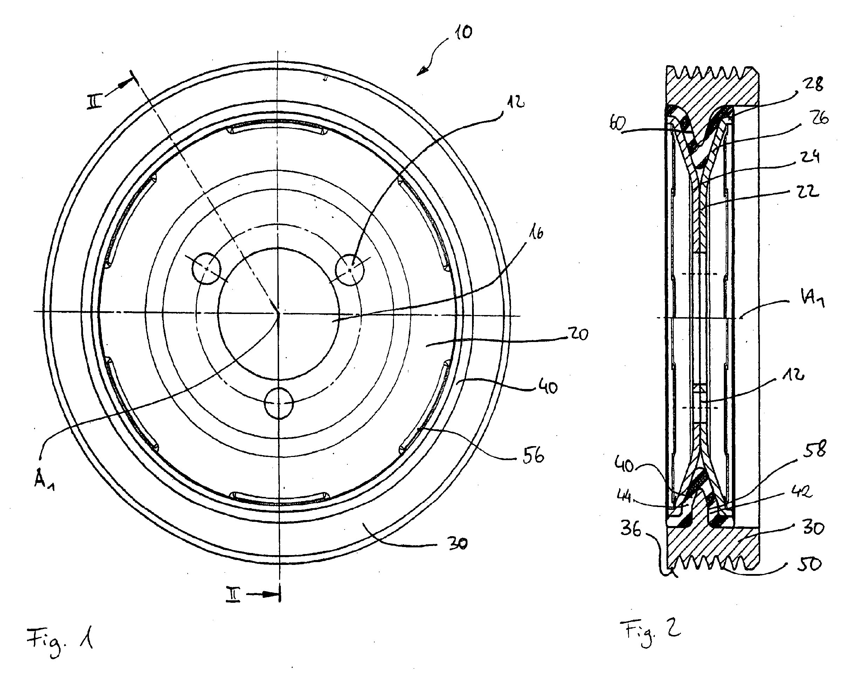

Fig.1 ist eine beispielhafte Drehschwingungsdämpferanordnung in der Draufsicht gezeigt und allgemein mit dem Bezugszeichen 10 bezeichnet. Diese umfasst eine um eine Drehachse A1 drehbare Primärmasse 20, eine konzentrisch zur Primärmasse 20 angeordnete Sekundärmasse 30 und einen zwischen Primärmasse 20 und Sekundärmasse 30 angeordneten Elastomerkörper 40.

Wie man in Fig.2, einer die Drehachse A1 enthaltenden Schnittansicht, erkennt, ist die Primärmasse 20 zweiteilig ausgeführt. Die beiden Masseteile 22; 24 der Primärmasse 20 sind in ihrer Form tellerartig ausgebildet. Sie weisen neben einer ebenen Grundfläche, die mit einer Achsaufnahmeöffnung 16 zur Aufnahme einer nicht dargestellten Antriebswelle, insbesondere einer Motorkurbelwelle, versehen ist, einen radial äußeren Konusbereich 26 auf, der in einen achsparallelen Bund 28 ausläuft. Die beiden spiegelsymmetrisch zueinander angeordneten und im Wesentlichen formidentisch ausgebildeten Masseteile 22; 24 liegen an ihrer Grundfläche aneinander an. Durch die spiegelsymmetrische Anordnung der beiden Masseteile 22; 24 dienen die voneinander wegweisenden radial äußeren Konusbereiche 26 mit ihrem achsparallelen Bund 28 zur Aufnahme und Abstützung des Elastomerkörpers 40.

Die einteilig ausgeführte Sekundärmasse 30 weist an ihrer zur Drehachse A1 gewandten Innenseite eine ringartige Aufnahmeformation 60 auf, die im Wesentlichen in ihrer Form komplementär zu dem an den Konusbereichen 26 der Masseteile 22; 24 der Primärmasse 20 entstehenden Zwischenraum gebildet ist. Darüber hinaus weist sie an ihrer Außenumfangsfläche 36 eine Keilprofilformation 50 auf, die zur Kopplung mit einem korrespondierenden Keilriemen (nicht dargestellt) dient.

Der Elastomerkörper 40 weist einen, wie in Fig.2 erkennbar, im Wesentlichen U-förmigen Querschnitt auf, dessen Längsschenkel 42; 44 an den Außenseiten der Konusbereiche 26 der beiden Masseteile 22; 24 der Primärmasse 20 sowie an deren achsparallelen Bunden 28 anliegt. Auf der gegenüberliegenden Seite des Elastomerkörpers 40 wird die Sekundärmasse 30 von diesem aufgenommen.

Die Vorformung des Elastomerkörpers 40 bringt den Vorteil, dass dieser an der Innenseite der Sekundärmasse 30 auf die ringförmige Aufnahmeformation 60 aufgebracht werden kann und im Anschluss daran durch beidseitiges Einsetzen der Masseteile 22; 24 der Primärmasse 20 sowie deren Vernietung zwischen Primärmasse 20 und Sekundärmasse 30 fixiert wird. Ein fehlerhaftes Einlegen der Elastomerkörpers 40 wird durch dessen Vorformung vermieden. Alternativ zu einer Nietverbindung sind auch andere Fügeverbindungen, wie beispielsweise eine Verschraubung der beiden Masseteile 22; 24 miteinander, denkbar.

Durch das Anbringen von wenigstens einem Paar von Anschlagmitteln, also wenigstens einem Anschlagelement 56 an der Primärmasse 20 und wenigstens einem korrespondierenden Gegenanschlagelement 58 an der Sekundärmasse 30, das durch eine lokale Aussparung 58 an der Aufnahmeformation 60 gebildet sein kann, wird die auf den Elastomerkörper 40 wirkende Scherbelastung, die in Umfangsrichtung bei einer Verdrehbewegung der Sekundärmasse 30 gegenüber der Primärmasse 20 auftritt, begrenzt. Eine Relativverdrehung zwischen Primärmasse 20 und Sekundärmasse 30 ist in Folge der Anschlagmittel nur soweit möglich, bis das Anschlagelement 56 und das Gegenanschlagelement 58 miteinander in Anlage gelangen. In den Beispielen der Fig.1 und 2 sind diese durch integral angebrachte Ausformungen 58 an der ringartigen Aufnahmeformation 60 der Sekundärmasse 30 und entsprechende Eintiefungen 56 in den Masseteilen 22; 24 der Primärmasse 20 umgesetzt.

Nach Zusammenbau der Drehschwingungsdämpferanordnung wird diese an einem Ende einer nicht dargestellten Antriebswelle an der dafür vorgesehenen Achsaufnahmeöffnung 16 aufgesteckt und mittels Schrauben und dafür vorgesehenen Befestigungsbohrungen 12 in der Primärmasse 20 mit der nicht gezeigten Welle verschraubt.

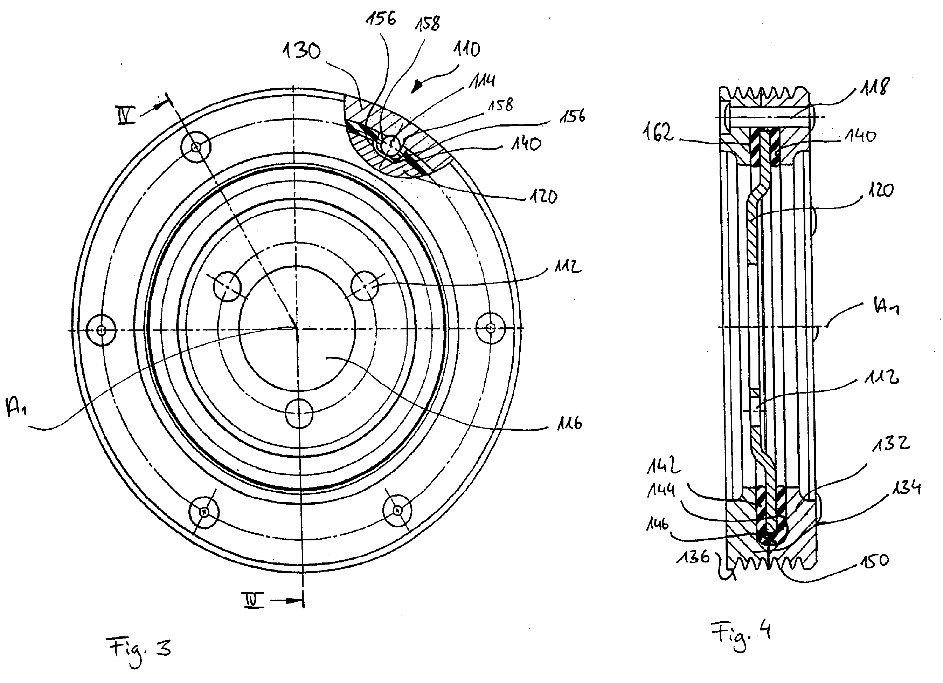

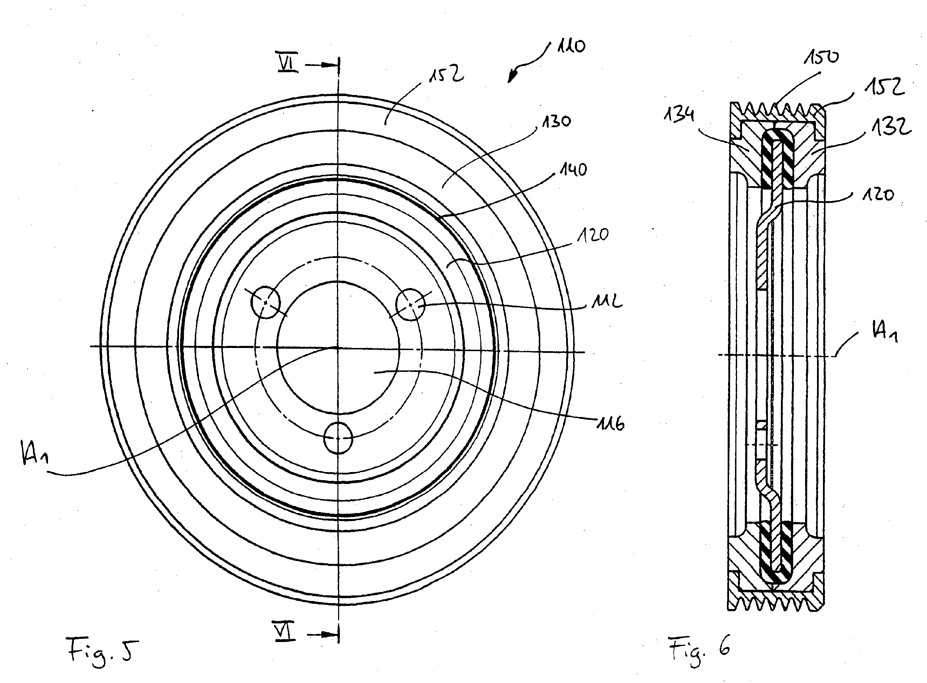

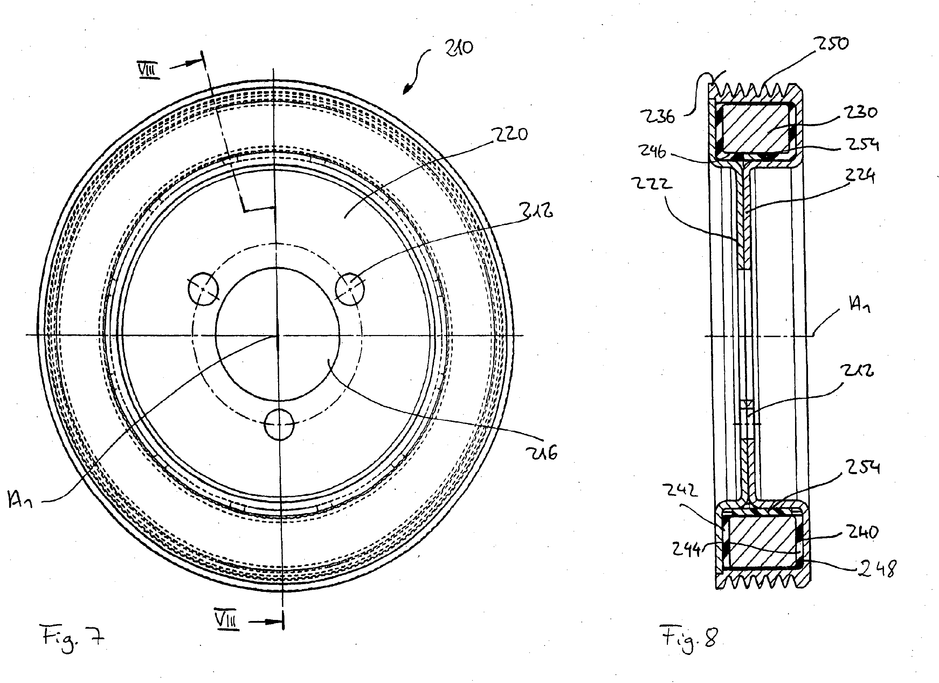

Die Fig.3 und 4 zeigen nun eine Abwandlung. Es werden dieselben Bezugszeichen verwendet, wie bei den Fig.1 und 2 jedoch mit der Ziffer "1" vorangestellt. Dasselbe gilt auch für die Fig.5 und 6, wobei jedoch eine Variation der Verbindung der Masseteile miteinander gezeigt ist. Analog dazu werden bei den Fig. 7 und 8, die die erfindungsgemäße Ausführungsform der Erfindung zeigen, die Bezugszeichen mit der vorangestellten Ziffer "2" versehen.

Das Beispiel gemäß Fig.3 und 4 sowie Fig.5 und 6 unterscheidet sich von dem Beispiel gemäß Fig.1 und 2 im Wesentlichen dadurch, dass sie eine einteilige Primärmasse 120 aufweist, während die Sekundärmasse 130 zweiteilig ausgeführt ist. Die Primärmasse 120 weist wiederum eine Achsaufnahmeöffnung 116 zur Aufnahme einer nicht dargestellten Antriebswelle auf, sowie Bohrungen 112 die zur Befestigung der Drehschwingungsdämpferanordnung 110 an der Antriebswelle angebracht sind. Der Elastomerkörper 140 nimmt die Primärmasse 120 zwischen den Innenseiten der beiden Längsschenkel 142 und 144 seines U-förmigen Querschnitts auf und liegt stirnseitig am Querschenkel 146 an.

Die zweiteilig ausgebildete Sekundärmasse 130 setzt sich wiederum aus zwei formidentischen Masseteilen 132 und 134 zusammen, welche an jeweils einer Seitenfläche eine Aussparung 162 zur Aufnahme des Elastomerkörpers 140 und der darin aufgenommenen Primärmasse 120 aufweisen. Ebenso wie bei Fig.2 befindet sich an der Außenumfangsfläche 136 der Sekundärmasse 130 eine Keilprofilformation 150 zur Kopplung mit einem korrespondierenden Keilriemen. Sechs gleichmäßig über den Umfang verteilte Bohrungen 114 nehmen Niete 118 auf, die beide Masseteile 132; 134 der Sekundärmasse 130 miteinander verbinden. Diese dienen gleichzeitig als Gegenanschlagelemente 158 für die an der Primärmasse ausgebildeten Anschlagflächen 156.

Während in den Fig.3 und 4 die Masseteile 132; 134 der Sekundärmasse 130 mittels Niete 118 verbunden werden und die Keilprofilformationen 150 direkt an der Außenumfangsfläche 136 der Massenteile 132; 134 angebracht ist, wird bei der erfindungsgemäßen Ausführungsform entsprechend den Fig.5 und 6 ein Klammerring 152 mit entsprechender außenseitig angebrachter Keilprofilformation 150 auf die beiden Masseteile 132; 134 der Sekundärmasse 130 aufgebracht, der diese teilweise umgreift und auf diese Weise zusammenhält. Dies hat den Vorteil, dass die Materialwahl für die Sekundärmasse 130 unabhängig von dem für die Keilprofilformation benötigten Material, wie beispielsweise gehärtetem Stahl, der eine geringe Abnutzung und hohe Lebensdauer gewährleistet, getroffen werden kann. Damit können sowohl die Material- als auch die Produktionskosten der Drehschwingungsdämpferanordnung 110 verringert werden.

Es sei ergänzend erwähnt, dass auch bei dieser Drehschwingungsdämpferanordnung 110 Anschlagmittel vorgesehen sein können, beispielsweise in Form von Vertiefungen als Anschlagelemente (nicht dargestellt), die über den Umfang der Primärmasse 120 verteilt sind, und korrespondierende Erhebungen als Gegenanschlagelemente (nicht dargestellt), die an der Innenseite wenigstens eines Masseteils 132; 134 der Sekundärmasse 130 liegen.

Fig.7 und 8 zeigen die erfindungsgemäße Ausführungsvariante einer Drehschwingungsdämpferanordnung 210. Die Besonderheit dieser Ausführungsform liegt darin, dass eine zweiteilig ausgeführte Primärmasse 220 mit ihren Masseteilen 222; 224 einen Hohlraum 248 im radial äußeren Bereich ausbildet, in welchem die einteilig ausgeführte Sekundärmasse 230 zusammen mit dem Elastomerkörper 240 aufgenommen wird.

Die Primärmasse 220 ist bei dieser Ausführungsform einerseits wie die bisher genannten Ausführungsvarianten der erfindungsgemäßen Drehschwingungsdämpferanordnung 210 über eine Achsaufnahmeöffnung 216 und Befestigungsbohrungen 212 mit einer nicht dargestellten Antriebswelle verbindbar. Darüber hinaus bildet sie auch die Schnittstelle zum Wechselwirken mit einem korrespondierenden Keilriemen über die an der Außenumfangsfläche 236 angebrachte Keilprofilformation 250.

Bei den Ausführungsformen der Fig.1 bis 6 waren die Masseteile der Primärmasse 220 oder der Sekundärmasse 230 jeweils formidentisch ausgebildet und spiegelsymmetrisch zueinander angeordnet. Bei dieser Ausführungsvariante hingegen bildet das Massenteil 224 der Primärmasse 220 einen Teil der Aufnahme der Antriebswelle, einen Teil des Hohlraums 248 zur Aufnahme der Sekundärmasse 230 sowie die Außenumfangsfläche 236 mit der Keilprofilformation 250. Das Masseteil 222 der Primärmasse 220 wird deckelähnlich mit dem Masseteil 224 mittels Presssitz verbunden und verschließt somit den Hohlraum 248, nachdem die Sekundärmasse 230 sowie der Elastomerkörper 240 eingebracht sind.

Bei dieser erfindungsgemäßen Drehschwingungsdämpferanordnung 210 werden unerwünschte Drehschwingungen wie bei einem Viskositäts-Drehschwingungsdämpfer durch eine Relativverdrehung der Sekundärmasse 230 gedämpft, die innerhalb des durch die beiden Masseteile 222 und 224 der Primärmasse 220 gebildeten Hohlraums 248 über den Elastomerkörper sozusagen schwimmend gelagert ist. Um Unwuchten zu vermeiden und eine definierte Relativbewegung der Sekundärmasse 230 gegenüber der Primärmasse 220 zu gewährleisten, ist, wie in Fig. 8 zu sehen, ein Gleitlagerring 254 in den Querschenkel 246 des U-förmigen Elastomerkörpers 240 eingebracht. Dieser wird bereits vor dem Vorformungsprozess des Elastomerkörpers 240, beispielsweise einer Vorvulkanisierung, an der Sekundärmasse 230 angebracht. Dadurch muss bei der Montage des Elastomerkörpers 240 nicht zusätzlich auf eine exakte Positionierung des Gleitlagerrings 254 geachtet werden und eine definierte Relativverdrehung der Sekundärmasse 230 gegenüber der Primärmasse 220 kann gewährleistet werden.

Schließlich sei angemerkt, dass auch bei dieser erfindungsgemäßen Ausführungsform eine Verwendung von Anschlagmitteln vorgesehen sein kann, wie in den vorangehenden Ausführungsvarianten. Beispielsweise können diese in Form von Erhebungen als Anschlagelement (nicht dargestellt), die an der radial äußeren Innenfläche des Masseteils 224 der Primärmasse 220 ausgebildet sind, und von korrespondierenden Vertiefungen als Gegenanschlagelemente (nicht dargestellt), die an der radial äußeren Seite der Sekundärmasse 230 liegen, ausgebildet werden.

## Patentansprüche

1. Drehschwingungsdämpferanordnung (210) mit einer um eine Drehachse (A1) drehbaren Primärmasse (220), einer relativ zur Primärmasse (220) um die Drehachse (A1) verdrehbaren Sekundärmasse (230) und einem zwischen Primärmasse (220) und Sekundärmasse (230) angeordneten Elastomerkörper (240), wobei zumindest eine von Primärmasse (220) und Sekundärmasse (230) als Baugruppe mehrerer Masseteile (222, 224 und 232, 234) aufgebaut ist,
wobei der Elastomerkörper (240) einteilig ausgeführt ist und vor einem Einbau in die Drehschwingungsdämpferanordnung (210) derart vorgeformt ist, dass er in der Drehschwingungsdämpferanordnung (210) in einem achsenhaltenden Schnitt betrachtet einen im Wesentlichen U-förmigen Querschnitt aufweist und dass die Masseteile (222, 224 und 232, 234) an den Längsschenkeln (242, 244) des U-förmigen Elastomerkörpers (240) angreifen, wobei die Primärmasse (220) sowohl mit einer Antriebswelle verbindbar ist als auch eine Keilprofilformation (250) zur Kopplung mit einem korrespondierenden Keilriemen an ihrem Außenumfangsbereich aufweist, **dadurch gekennzeichnet, dass** die Sekundärmasse (230) zusammen mit dem Elastomerkörper (240) in einem in der Primärmasse (220) ausgebildeten Hohlraum (2248) relativverdrehbar aufgenommen ist, und dass sich die Sekundärmasse (230) über einen Gleitlagerring (2254) gleitbeweglich an der Primärmasse (220) abstützt, wobei der Gleitlagerring (2254) in dem Elastomerkörper (240) angeordnet ist.

2. Drehschwingungsdämpferanordnung (210) nach Anspruch 1,
**dadurch gekennzeichnet, dass** der Elastomerkörper (240) durch einen Vorvulkanisierungsprozess vor einem Einbau in die Drehschwingungsdämpferanordnung (210) vorgeformt ist.

3. Drehschwingungsdämpferanordnung (210) nach Anspruch 1 oder 2,
**dadurch gekennzeichnet, dass** die Masseteile (222, 224 und 232, 234) über eine Nietverbindung miteinander verbunden sind.

4. Drehschwingungsdämpferanordnung (210) nach einem der vorangehenden Ansprüche,
**dadurch gekennzeichnet, dass** die Relativverdrehung zwischen Primärmasse (220) und Sekundärmasse (230) durch Anschlagmittel begrenzt ist.

5. Drehschwingungsdämpferanordnung (210) nach Anspruch 4,
**dadurch gekennzeichnet, dass** die Anschlagmittel wenigstens ein Anschlagelement (256) an der Primärmasse (220) und wenigstens ein korrespondierendes Gegenanschlagelement (258) an der Sekundärmasse (230) aufweisen.

## Claims

1. A damping arrangement for rotary oscillations (210), with a primary mass (220) which is rotatable about an axis of rotation (A1), a secondary mass (230) which is rotatable about the axis of rotation (A1) relative to the primary mass (220), and an elastomer body (240) which is arranged between the primary mass (220) and the secondary mass (230), wherein at least one of the primary mass (220) or the secondary mass (230) is constructed as an assembly of several mass parts (222, 224 and 232, 234),
wherein the elastomer body (240) is integrally formed and is deformed prior to the installation into the damping arrangement for rotary oscillations (210) in such a manner that it exhibits an essentially U-shaped cross-section in the damping arrangement for rotary oscillations (210), when viewed in an axial section and that the mass parts (222, 224 and 232, 234) attack at the longitudinal legs (24, 244) of the U-shaped elastomer body (240), wherein the primary mass (220) is connectable both with a drive shaft and also comprises a wedge profile formation (250) at its outer circumferential area for coupling to a corresponding V-belt,
**characterised in that** the secondary mass (230) together with the elastomer body (240) is accommodated in a hollow space (2248) formed in primary mass (220) so as to be relative rotatable, and that the secondary mass (230) slidably movable bears against the primary mass (220) via an anti-friction bearing ring (2254), wherein the anti-friction bearing ring (2254) is arranged in the elastomer body (240).

2. The damping arrangement for rotary oscillations (210) according to Claim 1,
**characterised in that** the elastomer body (240) is pre-formed by a pre-vulcanisation process prior to the installation into the damping arrangement for rotary oscillations (210).

3. The damping arrangement for rotary oscillations (210) according to Claim 1 or 2,
**characterised in that** the mass parts (222, 224 and 232, 234) are interconnected via a rivet connection.

4. The damping arrangement for rotary oscillations (210) according to one of the previous claims,
**characterised in that** the relative rotation between the primary mass (220) and the secondary mass (230) is limited by stop means.

5. The damping arrangement for rotary oscillations (210) according to Claim 4,
**characterised in that** the stop means comprise at least one stop element (256) at the primary mass (220) and at least one corresponding stop element (258) at the secondary mass (230).

## Revendications

1. Ensemble amortisseur de vibrations de torsion (210) comprenant une masse primaire (220) mobile en rotation autour d'un axe de rotation (A1), une masse secondaire (230) mobile en rotation par rapport à la masse primaire (220) autour de l'axe de rotation (A1) et un corps élastomère (240) disposé entre la masse primaire (220) et la masse secondaire (230), au moins une des masses primaire (220) et secondaire (230) étant réalisée sous la forme d'un sous-ensemble constitué de plusieurs masses partielles (222, 224 et 232, 234),
le corps élastomère (240) étant réalisé d'un seul tenant et étant, avant son montage dans l'ensemble amortisseur de vibrations de torsion (210), préformé de telle sorte qu'il présente, considéré dans l'ensemble amortisseur de vibrations de torsion (210) dans une coupe contenant l'axe, une section sensiblement en forme de U et que les masses partielles (222, 224 et 232, 234) sont en contact avec les branches longitudinales (242, 244) du corps élastomère (240) en forme de U, la masse primaire (220) pouvant être reliée à un arbre d'entraînement et présentant sur son pourtour extérieur un profil en biseaux (250) destiné à être accouplé à une courroie trapézoïdale correspondante,
**caractérisé en ce que** la masse secondaire (230) est logée, conjointement avec le corps élastomère (240), dans une cavité (2248) formée dans la masse primaire (220), de manière à pouvoir tourner par rapport à cette dernière, et **en ce que** la masse secondaire (230) est supportée de façon mobile en glissement par une bague de palier lisse (2254) sur la masse primaire (220), cette bague de palier lisse (2254) étant disposée dans le corps élastomère (240).

2. Ensemble amortisseur de vibrations de torsion (210) selon la revendication 1, **caractérisé en ce que** le corps élastomère (240) est préformé par processus de prévulcanisation avant son montage dans l'ensemble amortisseur de vibrations de torsion (210).

3. Ensemble amortisseur de vibrations de torsion (210) selon la revendication 1 ou 2, **caractérisé en ce que** la masses partielles (222, 224 et 232, 234) sont reliées entre elles par rivure.

4. Ensemble amortisseur de vibrations de torsion (210) selon l'une des revendications précédentes, **caractérisé en ce que** la rotation de la masse secondaire (230) par rapport à la masse primaire (220) est limitée par des moyens formant butée.

5. Ensemble amortisseur de vibrations de torsion (210) selon la revendication 4, **caractérisé en ce que** les moyens formant butée présentent au moins un élément de butée (256) sur la masse primaire (220) et au moins un élément de contre-butée (258) correspondant sur la masse secondaire (230).
